# EUROPEAN PATENT APPLICATION

(11) **EP 3 357 962 A1**
(43) Date of publication of application: **08.08.2018**
(21) Application number: 16850595.6
(22) Date of filing: 12.09.2016
(51) Int. Cl.: C08L 9/02, B32B 1/08, B32B 27/00, C08K 3/06, C08K 3/26, C08K 5/40, F16L 11/08

(54) **RUBBER COMPOSITION FOR HOSES, LAMINATED BODY FOR HOSES AND HOSE**

(30) Priority: 30.09.2015 JP 2015194811
(71) Applicant: Bridgestone Corporation, Tokyo 104-8340 (JP)
(72) Inventor: OCHIAI, Sho, Tokyo 104-8340 (JP)
(74) Representative: Oxley, Robin John George
(86) International application number: PCT/JP2016/004146
(87) International publication number: WO 2017/056414

(57) **Abstract**

A hose rubber composition that has improved adhesiveness to wires while maintaining rubber property is provided. The hose rubber composition comprises: acrylonitrile-butadiene rubber (NBR) as a rubber component; sulfur; a thiuram-based compound; and hydrotalcite, wherein a content of the hydrotalcite is 5 parts by mass or less with respect to 100 parts by mass of the rubber component.

## Description

### TECHNICAL FIELD

The present disclosure relates to a hose rubber composition, a hose laminated body, and a hose.

### BACKGROUND

Currently, hydraulic hoses are widely used in hydraulically actuated machines such as construction machines and industrial machines. A hydraulic hose normally needs to withstand high pressure, and transfer a driving force (pressure) accurately and speedily. It is also important that the hydraulic hose has high oil resistance, and low volume expansion due to pressure. Since the temperature of hydraulic oil is high while the machine is operating, the hydraulic hose is also required to have heat resistance. A typical hydraulic hose has a laminated structure in which an inner surface rubber layer made of rubber and in contact with hydraulic oil, a reinforcement layer for withstanding the pressure of hydraulic oil, and an outer surface rubber layer for preventing damage to the reinforcement layer and the inner surface rubber layer are laminated in order from inside.

Given the importance of heat resistance and oil resistance for the inner surface rubber layer of the hydraulic hose in contact with hydraulic oil, conventionally an acrylonitrile-butadiene rubber (NBR)-based rubber composition having favorable balance of these properties is mainly used in the inner surface rubber layer. Meanwhile, brass-plated wires are mainly used in the reinforcement layer.

For example, JP 2001-116173 A (hereafter PTL 1) discloses the following technique: To obtain a fiber-reinforced hose satisfying performance requirements such as heat resistance, oil resistance, pressure resistance, and sealability, acrylic rubber is used in at least one of an inner rubber layer (inner surface rubber layer) and an outer rubber layer (outer surface rubber layer), and a hydrotalcite compound is added to the acrylic rubber. The addition of the hydrotalcite compound improves thermal deterioration resistance.

JP 2001-123031 A (hereafter PTL 2) discloses the following hose: On the ground that NBR does not have satisfactory heat resistance and settling resistance, a rubber composition containing chlorinated polyethylene as a rubber component is used in an inner layer (inner surface rubber layer), and a hydrotalcite compound is further contained in the rubber composition. The addition of the hydrotalcite compound improves thermal deterioration resistance and settling resistance.

JP 2001-206987 A (hereafter PTL 3) discloses the following technique: To provide a hose with enhanced heat resistance, oil resistance, and ozone resistance, a rubber composition containing nitrile rubber and ethylene propylene diene rubber (EPDM) as rubber components and also containing organic peroxide and sulfur or a vulcanization accelerator is used in the hose, and a hydrotalcite compound is further contained in the rubber composition. The addition of the hydrotalcite compound improves thermal deterioration resistance.

### CITATION LIST

### Patent Literatures

PTL 1: JP 2001-116173 A
PTL 2: JP 2001-123031 A
PTL 3: JP 2001-206987 A

### SUMMARY

### (Technical Problem)

According to our research, however, the hoses disclosed in PTL 1 to PTL 3 have insufficient adhesiveness between the inner surface rubber layer and the reinforcement layer made of wires.

It could therefore be helpful to provide a hose rubber composition that has improved adhesiveness to wires while maintaining rubber property.

It could also be helpful to provide a highly durable hose laminated body and hose using the hose rubber composition.

### (Solution to Problem)

We provide the followings to solve the above-mentioned problems.

A hose rubber composition according to the present disclosure comprises: acrylonitrile-butadiene rubber (NBR) as a rubber component; sulfur; a thiuram-based compound; and hydrotalcite, wherein a content of the hydrotalcite is 5 parts by mass or less with respect to 100 parts by mass of the rubber component.

Such a hose rubber composition has improved adhesiveness to wires, while maintaining rubber property.

Preferably, the content of the hydrotalcite is 0.1 to 3 parts by mass with respect to 100 parts by mass of the rubber component. In this case, the adhesiveness to wires is further improved, with favorable rubber property.

Preferably, an acrylonitrile content (AN content) in the acrylonitrile-butadiene rubber (NBR) is 15 to 45 mass%. In this case, oil resistance is improved, with favorable low-temperature property and fatigue resistance.

Preferably, a ratio of the acrylonitrile-butadiene rubber (NBR) in the rubber component is 80 mass% or more. In this case, the adhesiveness to wires is further improved.

A hose laminated body according to the present disclosure comprises: a rubber layer made of the hose rubber composition stated above; and a reinforcement layer made of a brass-plated wire, wherein the rubber layer and the reinforcement layer are adhered to each other. Such a hose laminated body has high durability.

A hose according to the present disclosure uses the hose laminated body stated above. Such a hose has high durability.

### (Advantageous Effect)

It is thus possible to provide a hose rubber composition that has improved adhesiveness to wires while maintaining rubber property.

It is also possible to provide a highly durable hose laminated body and hose.

### BRIEF DESCRIPTION OF THE DRAWINGS

In the accompanying drawings:

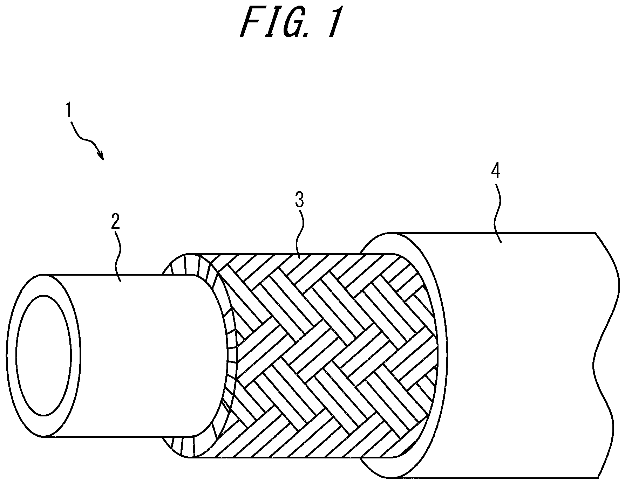

FIG. 1 is a perspective view illustrating the laminated structure of a hose using a hose rubber composition according to one of the disclosed embodiments.

### DETAILED DESCRIPTION

A hose rubber composition, a hose laminated body, and a hose according to one of the disclosed embodiments are described in detail below.

### <Hose rubber composition>

The hose rubber composition according to the present disclosure includes acrylonitrile-butadiene rubber (NBR) as a rubber component, and further includes sulfur, a thiuram-based compound, and hydrotalcite, wherein the content of the hydrotalcite is 5 parts by mass or less with respect to 100 parts by mass of the rubber component.

The hose rubber composition according to the present disclosure includes a thiuram-based compound acting as a vulcanization accelerator, together with sulfur acting as a vulcanizing agent. Adding sulfur and a thiuram-based compound in the rubber composition improves the adhesiveness of the rubber composition to wires, although the reason is not exactly known. Even with a rubber composition including sulfur and a thiuram-based compound, however, if the moisture content in the rubber composition is high, the adhesiveness to wires could decrease. Moisture in the rubber composition derives from the raw material, or enters into the rubber composition during storage. In view of this, the hose rubber composition according to the present disclosure further includes hydrotalcite that adsorbs moisture derived from the raw material or entered into the rubber composition during storage. Since the hydrotalcite adsorbs moisture, the hose rubber composition according to the present disclosure has high adhesiveness to wires regardless of the raw material and the storage condition, and unstable adhesiveness to wires is prevented. Moreover, in the hose rubber composition according to the present disclosure, the content of the hydrotalcite is 5 parts by mass or less with respect to 100 parts by mass of the rubber component, so that rubber property such as elongation at break (Eb) and tensile strength at break (Tb) is little affected by the hydrotalcite.

Hence, the hose rubber composition according to the present disclosure has improved adhesiveness to wires while maintaining rubber property.

Even in the case where NBR used as the rubber component is produced by emulsion polymerization and an emulsifier remains in the NBR, the hydrotalcite also adsorbs the emulsifier. This prevents the emulsifier from affecting the adhesiveness between the hose rubber composition and wires, and contributes to stable adhesiveness.

The hose rubber composition according to the present disclosure includes acrylonitrile-butadiene rubber (NBR) as the rubber component. The NBR may have a molecular chain end modified or unmodified. The rubber component in the hose rubber composition according to the present disclosure may include only NBR, or further include other rubber component(s).

The ratio of the NBR in the rubber component is not limited, but is preferably 80 to 100 mass% and more preferably 90 to 100 mass% in terms of the adhesiveness of the hose rubber composition to wires. If the ratio of the NBR is 80 mass% or more, the adhesiveness of the hose rubber composition to wires is further improved.

The NBR is not limited, and any known NBR may be selected as appropriate. The acrylonitrile content (AN content) in the NBR is preferably 15 to 45 mass%, more preferably 28 to 41 mass%, and still more preferably 35 to 41 mass%. If the AN content in the NBR is 45 mass% or less, low-temperature property and fatigue resistance are high. If the AN content is 15 mass% or more, sufficient oil resistance is obtained.

The hose rubber composition according to the present disclosure may optionally contain, as the rubber component, other rubber component(s) in addition to the NBR. Examples of such rubber component(s) include known natural rubbers (NR), synthetic rubbers such as styrene-butadiene rubber (SBR), isoprene rubber (IR), butadiene rubber (BR), ethylene propylene diene rubber (EPDM), butyl rubber (IIR), epoxidized natural rubber, polysulfide rubber, silicone rubber, fluororubber, and urethane rubber, and these natural rubbers or synthetic rubbers with their molecular chain ends modified. In the case of using such rubber component(s), their ratio in the rubber component is preferably 20 mass% or less, and further preferably 10 mass% or less.

The hose rubber composition according to the present disclosure further includes sulfur. The sulfur acts as a vulcanizing agent. The content of the sulfur is preferably 1.5 to 3 parts by mass, more preferably 1.5 to 2.5 parts by mass, and still more preferably 1.7 to 2.2 parts by mass, with respect to 100 parts by mass of the rubber component. If the content of the sulfur is 3 parts by mass or less, heat resistance is favorable. If the content of the sulfur is 1.5 parts by mass or more, the adhesiveness is further improved.

The hose rubber composition according to the present disclosure further includes a thiuram-based compound. The thiuram-based compound acts as a vulcanization accelerator. The thiuram-based compound also improves, together with the sulfur, the adhesiveness to wires typically used for hose reinforcement, in particular, brass-plated wires, and twist cords of brass-plated wires. The material of the wires is preferably metal.

The thiuram-based compound is preferably a compound that has >N-C(=S)- site and is expressed by, for example, the following general formula (1):

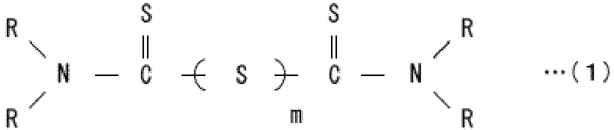

In the formula (1), m is an integer of 1 or more and is preferably 1 or 2, and R is independently a substituted or unsubstituted hydrocarbon group and is preferably an alkyl group, an aryl group, or an aralkyl group. As the alkyl group, a methyl group, an ethyl group, or a butyl group is preferable. As the aryl group, a phenyl group is preferable. As the aralkyl group, a benzyl group is preferable.

In more detail, preferable examples of the thiuram-based compound include tetramethylthiuram disulfide (TMTD), tetramethylthiuram monosulfide (TMTM), tetraethylthiuram disulfide (TETD), tetrabutylthiuram disulfide (TBTD), tetrabenzylthiuram disulfide (TBZTD), and tetrakis(2-ethylhexyl)thiuram disulfide. The thiuram-based compound may be a commercially available product. Examples include NOCCELER TT (TMTD), NOCCELER TS (TMTM), NOCCELER TET (TETD), NOCCELER TBT (TBTD), NOCCELER TBZTD (TBZTD), and NOCCELER TOT-N [tetrakis(2-ethylhexyl)thiuram disulfide] made by Ouchi Shinko Chemical Industrial Co., Ltd. These thiuram-based compounds may be used singly or in combination of two or more.

The content of the thiuram-based compound is preferably 0.5 to 5 parts by mass and more preferably 0.8 to 2.5 parts by mass, with respect to 100 parts by mass of the rubber component. If the content of the thiuram-based compound is 5 parts by mass or less, an excessive increase of rubber hardness is suppressed, and the possibility that residues of the thiuram-based compound bleed out after vulcanization is reduced. If the content of the thiuram-based compound is 0.5 parts by mass or more, sufficient vulcanization speed is achieved, and the adhesiveness of the rubber composition to wires is further improved.

The hose rubber composition according to the present disclosure further includes hydrotalcite. The hydrotalcite adsorbs moisture, and also adsorbs an emulsifier derived from the rubber component of the raw material if such an emulsifier is present, as mentioned above.

The hydrotalcite is usually a type of naturally occurring clay mineral, but may also be synthesized. In the present disclosure, any of a natural product and a synthetic product may be used. For example, the hydrotalcite is preferably a double hydroxide expressed by the following general formula (2):

M¹₈₋ₓM²ₓ(OH)₁₆CO₂·nH₂O ··· (2).

In the formula (2), M¹ is Mg²⁺, Fe²⁺, Zn²⁺, Ca²⁺, Ni²⁺, Co²⁺, Cu²⁺, or the like, M² is Al³⁺, Fe³⁺, Mn³⁺, or the like, and 2 ≤ x ≤ 5 and n ≥ 0.

In more detail, examples of the hydrotalcite include Mg_{4.5}Al₂(OH)₁₃CO₃·3.5H₂O, Mg_{4.5}Al₂(OH)₁₃CO₃, Mg₄Al₂(OH)₁₂CO₃·3.5H₂O, Mg₆Al₂(OH)₁₆CO₃·4H₂O, Mg₅Al₂(OH)₁₄CO₃·4H₂O, Mg₃Al₂(OH)₁₀CO₃·1.7H₂O, Mg₃ZnAl₂(OH)₁₂CO₃·wH₂O (w is a number of 0 or more), and Mg₃ZnAl₂(OH)₁₂CO₃. Commercially available hydrous hydrotalcites include, for example, "DHT-4A", "DHT-4A-2", "DHT-4C", "DHT-6", "KW-2000", "KW-2100", and "KW-2200" made by Kyowa Chemical Industry Co., Ltd.

The content of the hydrotalcite is 5 parts by mass or less and preferably 0.1 to 3 parts by mass, with respect to 100 parts by mass of the rubber component. If the content of the hydrotalcite is more than 5 parts by mass with respect to 100 parts by mass of the rubber component, the rubber property could be adversely affected. If the content of the hydrotalcite is 0.1 parts by mass or more with respect to 100 parts by mass of the rubber component, the capability of adsorbing moisture and emulsifiers is high, and the adhesiveness is further improved. If the content of the hydrotalcite is 3 parts by mass or less with respect to 100 parts by mass of the rubber component, favorable rubber property is obtained.

The hose rubber composition according to the present disclosure may contain various compounding agents other than the above-mentioned rubber component, sulfur, thiuram-based compound, and hydrotalcite. Examples of such compounding agents include vulcanizing agents other than sulfur, vulcanization accelerators other than thiuram-based compounds, vulcanization acceleration aids such as zinc oxide, reinforcing fillers such as carbon black, age resistors, plasticizers, petroleum resins, vulcanization retarders, waxes, antioxidants, fillers, foaming agents, oils, lubricants, tackifiers, ultraviolet absorbing agents, dispersants, compatibilizing agents, and homogenizing agents.

The content of the vulcanization acceleration aid is preferably 0.5 to 10 parts by mass and more preferably 0.5 to 3 parts by mass, with respect to 100 parts by mass of the rubber component. If the content of the vulcanization acceleration aid is 0.5 parts by mass or more, the vulcanization speed increases. If the content of the vulcanization acceleration aid is 10 parts by mass or less, the adhesiveness is further improved.

The content of the reinforcing filler is preferably 50 to 150 parts by mass and more preferably 80 to 120 parts by mass, with respect to 100 parts by mass of the rubber component. If the content of the reinforcing filler is 50 parts by mass or more, the strength is improved. If the content of the reinforcing filler is 150 parts by mass or less, the unvulcanized viscosity of the rubber composition is sufficiently low, and operability in kneading, rolling, and extrusion is favorable.

The hose rubber composition according to the present disclosure can be yielded by, for example, kneading the above-mentioned components using a kneader such as an open-type mixing roll or an internal-type Banbury mixer or kneader.

### <Hose laminated body>

The hose laminated body according to the present disclosure includes: a rubber layer made of the hose rubber composition described above: and a reinforcement layer made of brass-plated wires, wherein the rubber layer and the reinforcement layer are adhered to each other. The hose laminated body according to the present disclosure has high durability, because the rubber composition having high adhesiveness to wires adheres to the reinforcement layer made of wires.

The wires may be any brass-plated wires. Brass plating improves the adhesiveness between the reinforcement layer and the rubber layer made of the hose rubber composition. The copper content and the zinc content in the brass plating are not limited. The plating method is, for example, electroplating or electroless plating. The wires subjected to brass plating are, for example, steel wires.

### <Hose>

The hose according to the present disclosure uses the hose laminated body described above. The hose according to the present disclosure may include the hose laminated body in any part, but preferably the rubber layer of the hose laminated body corresponds to the inner surface rubber layer (inner tube rubber). The hose according to the present disclosure has high durability, because the above-mentioned highly durable hose laminated body is used.

For example, a hose 1 according to one of the disclosed embodiments in which the rubber layer of the hose laminated body is the inner surface rubber layer (inner tube rubber) includes an inner surface rubber layer (inner tube rubber) 2, a reinforcement layer 3 on the radially outer side of the inner surface rubber layer 2, and an outer surface rubber layer (outer cover rubber) 4 on the radially outer side of the reinforcement layer 3, as illustrated in FIG. 1. The reinforcement layer of the hose laminated body corresponds to the reinforcement layer 3 in the hose 1. The hose 1 in this embodiment is a hydraulic hose.

For example, such a hose can be manufactured by the following method.

First, the hose rubber composition according to the present disclosure is extruded onto the outside of a core body (mandrel) whose diameter is substantially the same as the hose inner diameter to coat the mandrel, thus forming the inner surface rubber layer (inner tube rubber) 2 (inner tube extrusion step). Next, a predetermined number of brass-plated wires are braided on the outside of the inner surface rubber layer 2 formed in the inner tube extrusion step to laminate the reinforcing layer 3 (braiding step), and a rubber composition for the outer surface rubber layer (outer cover rubber) is extruded onto the outside of the reinforcing layer 3 to form the outer surface rubber layer (outer cover rubber) 4 (outer cover extrusion step). Further, the outside of the outer surface rubber layer 4 formed in the outer cover extrusion step is optionally coated with resin (resin mold coating step), and the structure is vulcanized under normal conditions (vulcanization step). After the vulcanization, the coating resin is peeled away (resin mold peeling step), and the mandrel is removed (mandrel removal step). This produces the hose 1 having the reinforcing layer 3 between the inner surface rubber layer 2 and the outer surface rubber layer 4.

The structure of the hose 1 may be a three-layer structure in which the inner surface rubber layer 2, the reinforcement layer 3, and the outer surface rubber layer 4 are laminated in order from inside as described above. Alternatively, in the case where higher strength and the like are necessary, the structure of the hose may be a five-layer structure in which the reinforcement layer is made up of two layers and an intermediate rubber layer (intermediate rubber) is provided between the two reinforcement layers, although not illustrated. The structure may be set as appropriate depending on the required properties, etc. of the hose.

### EXAMPLES

The disclosed techniques are described in more detail below using examples, although the present disclosure is not limited to these examples.

### <Preparation and evaluation of rubber composition>

The rubber component and compounding agents (all raw materials except sulfur and vulcanization accelerators) listed in Table 1 were introduced into an internal mixer, kneaded until the temperature of the kneaded matter reached 170°C, and then cooled to about 40°C or less.

Following this, the sulfur and the vulcanization accelerators were introduced, and kneaded until the temperature of the kneaded matter reached 110°C, to prepare a rubber composition.

### (1) Initial adhesiveness

The unvulcanized rubber composition was rolled to form a sheet of 150 mm × 150 mm × 2 mm, and seven brass-plated wires cut to φ 0.33 mm × 100 mm were arranged on the rubber sheet with no space therebetween. They were then vulcanized under the conditions of 150°C × 60 min, in a state of being fixed with tape. After the vulcanization, the sample was taken out and left at room temperature for 24 hr. After this, five out of the seven wires except two wires at both ends were ripped at the same time at 90 degrees. The adhesion rate of the rubber to the entire surfaces of the wires (rubber coverage for the contact surfaces of the wires with the rubber) at the time was expressed in percentage. A larger value indicates higher initial adhesiveness.

Regarding the adhesiveness, the sample was evaluated as
"excellent" in the case where the rubber adhesion rate was 90 % or more,
"good" in the case where the rubber adhesion rate was 80 % or more and less than 90 %, and
"poor" in the case where the rubber adhesion rate was less than 80 %.

### (2) Rubber property

The obtained rubber composition was vulcanized under the conditions of 150°C × 60 min, and then subjected to a tensile test at room temperature (23°C) in conformity with JIS K6251, to measure elongation at break (Eb) and tensile strength at break (Tb). Each result was expressed by an index with the result of Comparative Example 1 being set to 100. A larger index indicates higher elongation at break or tensile strength at break.

Regarding the rubber property, the sample was evaluated as
"excellent" in the case where both indices of Eb and Tb were 90 or more, and
"poor" in the case where at least one of the indices of Eb and Tb was less than 90.

Overall evaluation was made as follows. The sample was evaluated as
"excellent" in the case where both the adhesiveness and the rubber property were excellent,
"good" in the case where the adhesiveness was good and the rubber property was excellent, and
"poor" in the case where at least one of the adhesiveness and the rubber property was poor.

**[Table 1]**

| | | | Comparative Example 1 | Example 1 | Example 2 | Example 3 | Example 4 | Example 5 | Example 6 | Comparative Example 2 | Comparative Example 3 | Comparative Example 4 | Example 7 | Example 8 | Example 9 | Comparative Example 5 | Comparative Example 6 |
|---|---|---|---|---|---|---|---|---|---|---|---|---|---|---|---|---|---|
| | NBR 1 *1 | | 100 | 100 | 100 | 100 | 100 | 100 | 100 | 100 | 100 | 100 | 80 | 70 | 0 | 0 | 100 |
| | NBR 2 *2 | | 0 | 0 | 0 | 0 | 0 | 0 | 0 | 0 | 0 | 0 | 0 | 0 | 100 | 100 | 0 |
| | SBR *3 | | 0 | 0 | 0 | 0 | 0 | 0 | 0 | 0 | 0 | 0 | 20 | 30 | 0 | 0 | 0 |
| | Carbon black *4 | | 100 | 100 | 100 | 100 | 100 | 100 | 100 | 100 | 100 | 100 | 100 | 100 | 100 | 100 | 100 |
| | Age resistor *5 | | 1 | 1 | 1 | 1 | 1 | 1 | 1 | 1 | 1 | 1 | 1 | 1 | 1 | 1 | 1 |
| | Petroleum resin *6 | | 2 | 2 | 2 | 2 | 2 | 2 | 2 | 2 | 2 | 2 | 2 | 2 | 2 | 2 | 2 |
| | Plasticizer *7 | | 12 | 12 | 12 | 12 | 12 | 12 | 12 | 12 | 12 | 12 | 12 | 12 | 12 | 12 | 12 |
| | Sulfur *8 | Parts by | 2 | 2 | 2 | 2 | 2 | 2 | 2 | 2 | 2 | 2 | 2 | 2 | 2 | 2 | 2 |
| Composition | Vulcanization accelerator 1 *9 | mass | 1 | 1 | 1 | 1 | 1 | 1 | 1 | 1 | 1 | 1 | 1 | 1 | 1 | 1 | 0 |
| | Vulcanization accelerator 2 *10 | | 0.5 | 0.5 | 0.5 | 0.5 | 0.5 | 0.5 | 0.5 | 0.5 | 0.5 | 0.5 | 0.5 | 0.5 | 0.5 | 0.5 | 2 |
| | Zinc oxide *11 | | 1 | 1 | 1 | 1 | 1 | 1 | 1 | 1 | 1 | 1 | 1 | 1 | 1 | 1 | 1 |
| | Vulcanization retarder *12 | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | Hydrotalcite 1 *13 | | 0 | 0.2 | 0.5 | 1 | 0 | 1.5 | 5 | 10 | 0 | 0 | 1 | 1 | 1 | 0 | 1 |
| | Hydrotalcite 2 *14 | | 0 | 0 | 0 | 0 | 1 | 0 | 0 | 0 | 0 | 0 | 0 | 0 | 0 | 0 | 0 |
| | Magnesium oxide *15 | | 0 | 0 | 0 | 0 | 0 | 0 | 0 | 0 | 1 | 0 | 0 | 0 | 0 | 0 | 0 |
| | Calcium oxide *16 | | 0 | 0 | 0 | 0 | 0 | 0 | 0 | 0 | 0 | 1 | 0 | 0 | 0 | 0 | 0 |
| Adhesiveness | Initial adhesiveness | % | 5 | 93 | 100 | 100 | 100 | 100 | 100 | 100 | 55 | 40 | 100 | 85 | 100 | 80 | 0 |
| | Evaluation | - | Poor | Excellent | Excellent | Excellent | Excellent | Excellent | Excellent | Excellent | Poor | Poor | Excellent | Good | Excellent | Good | Poor |
| Rubber property | Elongation at break (Eb) | Index | 100 | 97 | 96 | 93 | 95 | 93 | 91 | 70 | 98 | 96 | 96 | 95 | 98 | 92 | 96 |
| | Tensile strength at break (Tb) | Index | 100 | 100 | 99 | 95 | 94 | 92 | 90 | 80 | 99 | 97 | 95 | 93 | 104 | 103 | 104 |
| | Evaluation | - | Excellent | Excellent | Excellent | Excellent | Excellent | Excellent | Excellent | Poor | Excellent | Excellent | Excellent | Excellent | Excellent | Excellent | Excellent |
| Overall evaluation | | - | Poor | Excellent | Excellent | Excellent | Excellent | Excellent | Excellent | Poor | Poor | Poor | Excellent | Good | Excellent | Good | Poor |

*1 NBR 1: "PERBUNAN 2870F" made by LANXESS, AN content = 28 mass%
*2 NBR 2: "JSR N230SV" made by JSR Corporation, AN content = 35 mass%
*3 SBR: "JSR 1500" made by JSR Corporation
*4 Carbon black: "Asahi #50" made by Asahi Carbon Co., Ltd., SRF-grade carbon black
*5 Age resistor: "NOCRAC 224" made by Ouchi Shinko Chemical Industrial Co., Ltd.
*6 Petroleum resin: "ESCOREZ 1102" made by Tonen Chemical Corporation, polymerized hydrocarbon fraction with 4 to 5 carbons
*7 Plasticizer: "Sansocizer DOA" made by New Japan Chemical Co., Ltd., dioctyl adipate (DOA)
*8 Sulfur: "SULFAX 5" made by Tsurumi Chemical Industry Co., Ltd.
*9 Vulcanization accelerator 1: "NOCCELER TS" made by Ouchi Shinko Chemical Industrial Co., Ltd., vulcanization accelerator TMTM, tetramethylthiuram monosulfide, compound expressed by formula (1) where m is 1 and four R are each a methyl group
*10 Vulcanization accelerator 2: "NOCCELER DM" made by Ouchi Shinko Chemical Industrial Co., Ltd., vulcanization accelerator MBTS, di-2-benzothiazolyl disulfide
*11 Zinc oxide: "Ginrei SR" made by Toho Zinc Co., Ltd.
*12 Vulcanization retarder: "Santogard PVI" made by Monsanto Company
*13 Hydrotalcite 1: "DHT-4A-2" made by Kyowa Chemical Industry Co., Ltd. (BET specific surface area: 12 m²/g)
*14 Hydrotalcite 2: "KW-2100" made by Kyowa Chemical Industry Co., Ltd. (BET specific surface area: 190 m²/g)
*15 Magnesium oxide: "KYOWAMAG 30" made by Kyowa Chemical Industry Co., Ltd.
*16 Calcium oxide: "CML#21" made by Ohmi Chemical Industry Co., Ltd.

It can be understood from Table 1 that the rubber composition of each Example according to the present disclosure had improved adhesiveness to wires while maintaining the rubber property.

### INDUSTRIAL APPLICABILITY

The hose rubber composition according to the present disclosure can be used in various parts of a hose. The hose rubber composition according to the present disclosure is preferably used in a rubber layer laminated on a reinforcement layer made of brass-plated wires, and is particularly suitable for use in an inner surface rubber layer (inner tube rubber) of a hydraulic hose. The hose laminated body according to the present disclosure can be used in various hoses having laminated structures. The hose according to the present disclosure is suitable for use in, for example, various hydraulically actuated machines such as industrial machines and construction machines.

### REFERENCE SIGNS LIST

- 1: hose
- 2: inner surface rubber layer (inner tube rubber)
- 3: reinforcement layer
- 4: outer surface rubber layer (outer cover rubber)

## Claims

1. A hose rubber composition comprising:
acrylonitrile-butadiene rubber (NBR) as a rubber component;
sulfur;
a thiuram-based compound; and
hydrotalcite,
wherein a content of the hydrotalcite is 5 parts by mass or less with respect to 100 parts by mass of the rubber component.

2. The hose rubber composition according to claim 1,
wherein the content of the hydrotalcite is 0.1 to 3 parts by mass with respect to 100 parts by mass of the rubber component.

3. The hose rubber composition according to claim 1 or 2,
wherein an acrylonitrile content (AN content) in the acrylonitrile-butadiene rubber (NBR) is 15 to 45 mass%.

4. The hose rubber composition according to any one of claims 1 to 3,
wherein a ratio of the acrylonitrile-butadiene rubber (NBR) in the rubber component is 80 mass% or more.

5. A hose laminated body comprising:
a rubber layer made of the hose rubber composition according to any one of claims 1 to 4; and
a reinforcement layer made of a brass-plated wire,
wherein the rubber layer and the reinforcement layer are adhered to each other.

6. A hose using the hose laminated body according to claim 5.
